# EUROPEAN PATENT SPECIFICATION

(11) **EP 1 097 296 B1**
(45) Date of publication and mention of the grant of the patent: **12.05.2004**
(21) Application number: 99933427.9
(22) Date of filing: 02.07.1999
(51) Int. Cl.: F01N 1/24, F16L 55/033

(54) **DOUBLE-WALLED STRUCTURE IN A VENTILATION DUCT SYSTEM**
DOPPELWANDSTRUKTUR IN EINEM LUFTZUFUHRSYSTEM
STRUCTURE DOUBLE PAROI D'UN SYSTEME DE CONDUIT DE VENTILATION

(30) Priority: 10.07.1998 SE 9802490
(43) Date of publication of application: 09.05.2001
(73) Proprietor: Lindab AB, 269 82 Bastad (SE)
(72) Inventor: HULTBERG, Kent, S-269 42 Baastad (SE); RAANTA, Teuvo, S-312 72 Laholm (SE); LARSSON, Hans, S-252 52 Helsingborg (SE)
(74) Representative: Bjerre, Nils B.J.
(86) International application number: PCT/SE1999/001203
(87) International publication number: WO 2000/003129

(56) References cited:
- EP-A- 0 384 625
- EP-A- 0 384 651
- WO-A1-94/07620
- GB-A- 1 574 480
- GB-A- 2 122 256
- US-A- 4 160 312
- PATENT ABSTRACTS OF JAPAN vol. 13, no. 521 (M-896) & JP 01 211 608 A (NIPPON STEEL CHEM CO) 24 August 1989

## Description

### Field of the Invention

The present invention relates to double-walled structures, such as silencers for use in ventilation duct systems, relevant background art being disclosed in GB-A-1,574,480. The invention also concerns the production of such double-walled structures. Further, the invention is related to the field of producing helically-wound lock-seam tubing, in particular for circular ventilation duct systems.

### Background of the Invention

Double-walled structures for use in ventilation duct systems are well known in the art. In a brochure entitled "LindabSilencer" printed in 1988 and distributed by Lindab Ltd., various double-walled silencers are disclosed. On p. 2 of this Lindab brochure, the general construction of such silencers is described. A typical Lindab silencer comprises an inner tube of perforated thin metal sheet and an outer tube or casing which typically is a helically-wound lock-seam tube of thin metal sheet. The space between the two tubes is filled with sound-absorbing material, such as mineral wool, of different types and densities depending on the field of use. Between the perforated inner tube and the sound-absorbing material, there is a thin fibre layer, the purpose of which is to prevent fibres from the sound-absorbing material from being drawn into the air duct defined by the inner tube. Without such fibre layer, there is a risk that suction forces in the air duct will draw the insulation material into the duct and thereby impair the sound-absorbing effect of the silencer.

Several examples of circular double-walled silencers are shown in the above-mentioned Lindab brochure. Most of these silencers have end pieces at each end which are provided with tubular portions for connection to circular ducts in the ventilation duct system. Other double-walled structures (not shown in the Lindab brochure) are provided with insulation material over their full length, in which case no end pieces are mounted.

For the sake of completeness, reference is also made to Japanese Patent Abstract No. 1,211,608, in which an additional silencer structure is disclosed. Further, British Patent Publication No. 2,122,256 is mentioned as background art, in which Fig. 3 shows still another silencer.

In the prior-art described above, the thin fibre layer for covering the perforated inner tube is provided in the following manner. First, a rectangular piece of fibre material taken from a web-like supply is cut in a first separate operation. The shape of the fibre material piece is adapted to the shape and circumference of the perforated inner tube. Second, the cut fibre material piece is swept about the perforated inner tube, and third the fibre piece is fastened thereon, for instance by means of adhesive. Again, these are separate operations.

The operations are time-consuming and are often carried out manually, which is disadvantageous. The unnecessarily complicated operations for applying the fibre layer increase the total cost of the double-walled structure. Thus, there is a need for providing a new type of double-walled structure which is produced in an improved way.

It is known to use an inner tube in the shape of a helically-wound tube, which can basically be produced in an apparatus of the type disclosed in French Patent Publication No. 1,307,015. The purpose of the apparatus disclosed in this French publication is to provide a helically-wound lock-seam tube covered by a plastic layer on its inside. The inner plastic cover is intended to prevent corrosion on the inside of the tube. Thus, a strip of plastic material is applied on that side of the metal strip which forms the inside of the tube before the strip is supplied to the forming head. In order to provide a continuous plastic cover on the inside of the tube, the apparatus is equipped with a special welding unit for welding the joints of the helically formed plastic strip inside the tube.

In addition to the problems discussed above, designers of double-walled structures and silencers of the present type are interested in keeping material costs as low as possible. Further, experts on silencers of the kind described are always striving to enhance the sound-absorbing effect.

GB-A-1,574,480 dicloses a sound-absorbing material between an outer wall and a perforated inner wall.

WO 98/17412 discloses a filter structure having a helically formed inner tube of expanded metal. However, this known structure is not adapted for use in ventilation duct systems and has no sound-absorbing effect.

As to prior art, US Patent No. 4,034,826 should be mentioned as well. Indeed, this patent discloses a ventilation duct silencer having an inner tube of expanded metal, but the inner tube is not helically formed.

EP-A-0,384,625 discloses an apparatus for forming a helically-wound pipe for an oil filter. The pipe is formed from a perforated metal strip.

### Summary of the Invention

An object of the invention is to eliminate the drawbacks mentioned above by providing an improved double-walled structure, in particular a silencer for a ventilation duct system.

A specific object of the invention is to provide a double-walled structure which can be produced with a reduced consumption of material and which has an enhanced sound-absorbing effect.

These objects are achieved by a double-walled structure in a ventilation duct system as defined in appended claim 1, preferred embodiments thereof being set forth in the related subclaims.

Further, the objects are achieved by a use as defined in appended claim 12.

The invention gives several advantages. Since the inner tube is formed from an expanded-metal strip, material savings on the order of 10-20% can be achieved compared with conventional production. Scrap is kept at a minimum.

It has surprisingly been found that the expanded metal areas have a favourable effect on the sound-absorbing function. In practical tests with ventilation duct silencers provided with expanded-metal inner tubes, it has been found that the sound-absorbing effect is enhanced by out 3-5 dB, at least in the frequency range 0-1000 Hz, compared with known silencers. This is very favourable, since it is most important to damp the sound in this range.

The expanded-metal inner tube is covered with a fluid-permeable material preventing fibres from the sound-absorbing material from being drawn into the ventilation duct.

Further advantages of the expanded-metal inner tube are that it has an improved stiffness and that the production of the tube is very effective.

The invention is applicable to many kinds of double-walled structures, such as long ventilation ducts which are provided with insulating material over their full length and which have no end pieces.

### Brief Description of the Drawings

The invention will now be described in more detail with reference to the accompanying schematic drawings which show preferred embodiments of the invention and in which:
Fig. 1 is a perspective view from above of an arrangement for producing a double-walled structure,
Fig. 2 is a cross-section along the line II-II in Fig. 1 showing a metal strip, a cloth strip and guiding plates,
Fig. 3 is a cross-section of a tubing fed out of a forming head, along the line III-III in Fig. 1,
Fig. 4 is a detail of Fig. 3 showing on a larger scale a cross-section of a lock seam of the tube,
Fig. 5 shows the application of a piece of filler material on the tubing produced in the arrangement shown in Fig. 1,
Fig. 6 shows the insertion of the tube assembly in an outer tube,
Fig. 7 shows the mounting of an end piece on one end of the double-walled structure,
Fig. 8 is a top plan view of a forming head for forming an expanded-metal tube, and
Fig. 9 is a perspective view of a cut portion of a tube shown in Fig. 8.

### Description of Preferred Embodiments

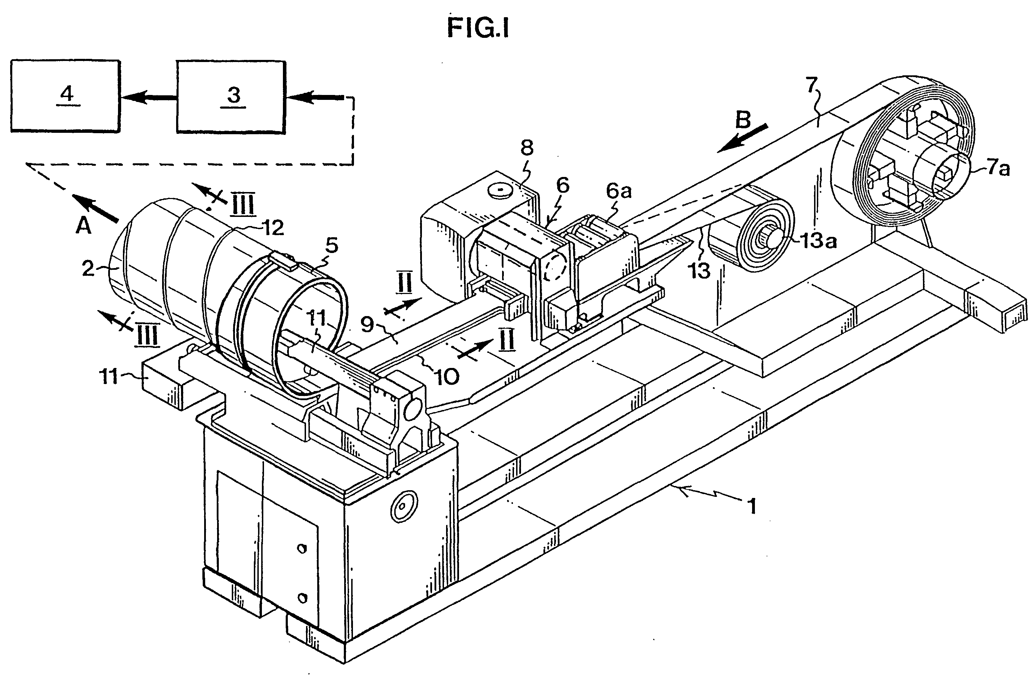

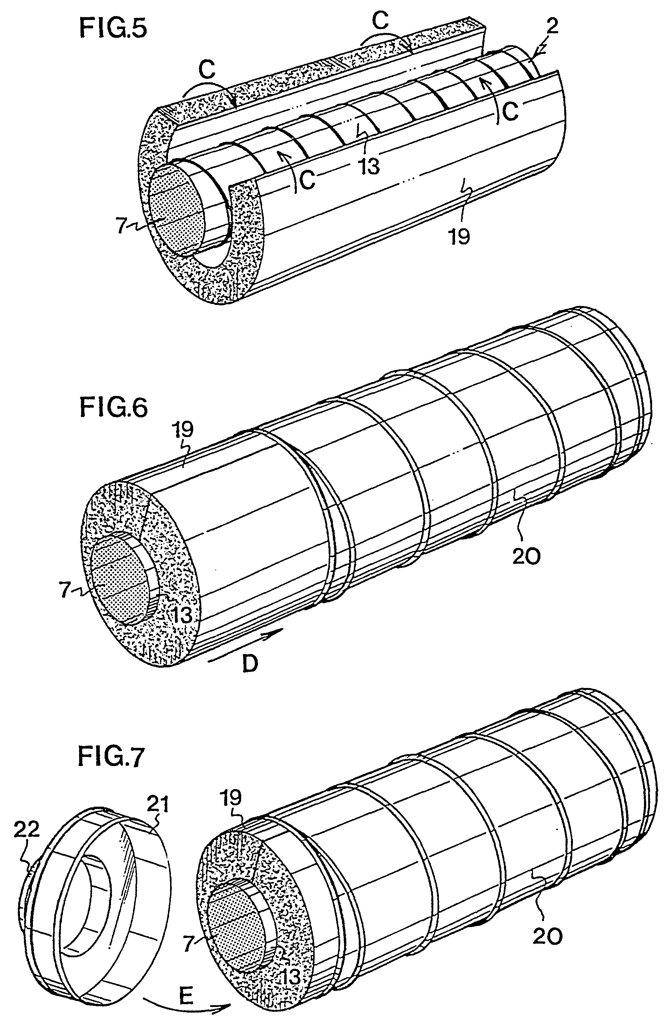

Fig. 1 shows an arrangement for producing a double-walled structure in accordance with a presently preferred embodiment. In the illustrated, non-limitative example, the double-walled structure is a silencer for use in a ventilation duct system (see Fig. 7).

The arrangement and method for forming the double-walled structure according to the invention are disclosed for case of the reproducibility by the person skilled in the art.

The arrangement comprises a machine 1 for producing helically-wound lock-seam tubing 2, a schematically shown apparatus 3 for applying filler material, here sound-absorbing material, on the outside of the tubing 2 such that the tubing 2 and the sound-absorbing material form a tube assembly (see Fig. 5), and a schematically shown apparatus 4 for enclosing said tube assembly in a casing (see Figs 6-7). The two apparatus 3 and 4 may be of known construction and are therefore not described in detail here.

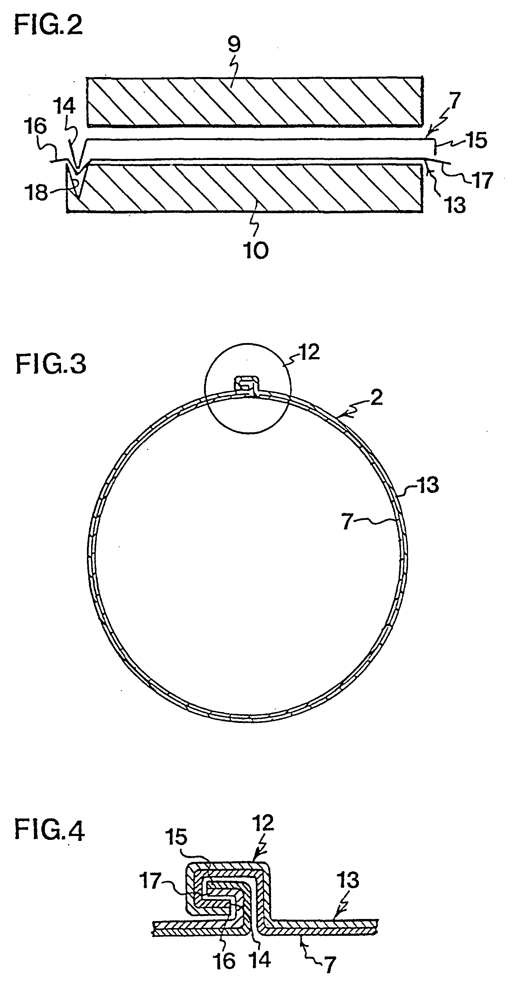

The machine 1 comprises a forming head 5 for forming the helically-wound lock-seam tubing 2 which is fed out of the forming head 5 (arrow A). Further, the machine 1 has a drive roller assembly 6 for feeding a first strip 7 which is wound on a reel 7a to the forming head 5 (arrow B). The rollers of the drive roller assembly 6 are driven by a drive unit 8. Guiding plates 9 and 10 are provided for guiding the first strip 7 into the forming head 5 (see Fig. 2).

After the forming head 5, a cutting unit 11 is provided for cutting the tubing 2 into suitable, predetermined lengths. The cutting unit 11 may be of a type known in the art and need not be described in detail here.

The first strip 7 is a perforated metal strip which forms the body of the tubing 2 fed out of the forming head 5 and having a helical lock seam 12.

A second strip 13 wound on a reel 13a is fed to the forming head 5 by means of the drive roller assembly 6. The second strip 13, which in this example is of a flexible, air-permeable material, is applied to that side of the perforated metal strip 7 which forms the outside of the tube body. Thus, the two strips 7 and 13 are joined in the drive roller assembly 6 and fed together as a composite strip into the forming head 5, in which this composite strip is helically formed into the tubing 2. It is preferred that the two strips 7 and 13 have substantially the same width. In an embodiment which in practice has shown excellent results, the air-permeable strip 13 is a cloth material, preferably a polymer material, and the metal strip 7 is of thin metal sheet.

Fig. 2 illustrates the two guiding plates 9 and 10 and the two strips 7 and 13 (the plates and strips being shown somewhat spaced apart for clarity reasons). Before the drive roller assembly 6, the two longitudinal edge portions 14 and 15 of the metal strip 7 are edge-formed as shown in Fig. 2 by means of edge-forming rollers 6a (see Fig. 1). This forming of the edge portions 14 and 15 is carried out in order to obtain a secure lock seam 12 of the tubing 2. The cloth strip 13, which has longitudinal edge portions 16 and 17, is held on the upper surface of the lower guiding plate 10. As is shown in Fig. 2, the lower guiding plate 10 has a V-shaped groove 18, which corresponds to the V-shaped edge portion 14 of the metal strip 7. The guiding plates 9 and 10 serve to guide the two strips 7 and 13 applied together in a secure manner into the forming head 5.

Fig. 3 shows a cross-section of the tubing 2 after the forming head 5. The two strips 7 and 13 are helically wound together, and the cloth strip 13 tightly covers the perforations of the metal strip 7 forming the body of the tubing 2.

A cross-section of the lock seam 12 of Fig. 3 is shown in detail in Fig. 4. For clarity reasons, the two bent edge portions of the tube wall of the lock seam 12 are shown at a small distance from each other in Fig. 4. In practice, these tube edge wall portions are clinched together in order to obtain a secure lock seam 12. It is, however, clear from Fig. 4 that the edge portions 16 and 17 of the cloth strip 13 are lock-seamed together with the edge portions 14 and 15 of the metal strip 7 such that the edge portions 16 and 17 of the cloth strip 13 are securely fastened in the helical lock seam 12 of the tubing 2.

The tubing 2 fed out of the forming head 5 is adapted to form the inner tube of a silencer for use in a ventilation duct system. The final steps for producing the silencer are shown in Figs 5-7.

Fig. 5 shows how a rectangular piece 19 of a filler or sound-absorbing material, preferably wool, is swept around the tubing 2 (arrows C) consisting of a perforated inner tube body formed of the metal strip 7 and covered by an air-permeable layer formed by the cloth strip 13. The wool piece 19 is applied on the outside of the tubing 2, and this tube assembly 2, 19 is inserted in a tubular casing 20 coaxial with the inner tube (see Fig. 6, arrow D).

Preferably, the casing 20 is a helically-wound lock-seam tube formed from a strip of thin metal sheet. Fig. 7 shows how an end piece 21 is mounted on one end of the casing 20 (arrow E). The casing 20 is provided with one end piece 21 at each end. Each end piece 21 has a tubular portion 22 for connection to circular ducts (not shown) in a ventilation duct system. After mounting of the two end pieces 21, which are optional, the manufacturing of the aimed-at double-walled silencer is finished. In the double-walled structure achieved, the inner tube 2 is a first wall and the outer tube 20 is a second wall.

It should be noted that the shape of the casing 20 is not crucial; it may alternatively have other forms and cross-sections, such as elliptic, rectangular, etc.

Briefly, the double-walled structure is manufactured as follows.

The perforated metal strip 7 is fed to the forming head 5 together with the cloth strip 13 applied to that side of the metal strip 7 which forms the outside surface of the tube body. The two strips 7 and 13 are helically wound as a composite strip in the forming head 5, and the edge portions 16 and 17 of the cloth strip 13 are securely fastened in the helical lock seam 12. The tubing 2 consisting of the perforated, helically-wound strip 7 covered by the likewise helically-wound cloth strip 13 is cut in a suitable length corresponding to the aimed-at silencer. In the apparatus 3, the sound-absorbing material 19 is applied to the outside surface of the tube 2, and finally the tube assembly 2, 19 consisting of the helically-wound tubing 2 and the sound-absorbing material 19 applied thereon is inserted in the tubular casing 20. Optionally, the casing 20 is closed by two end pieces 21.

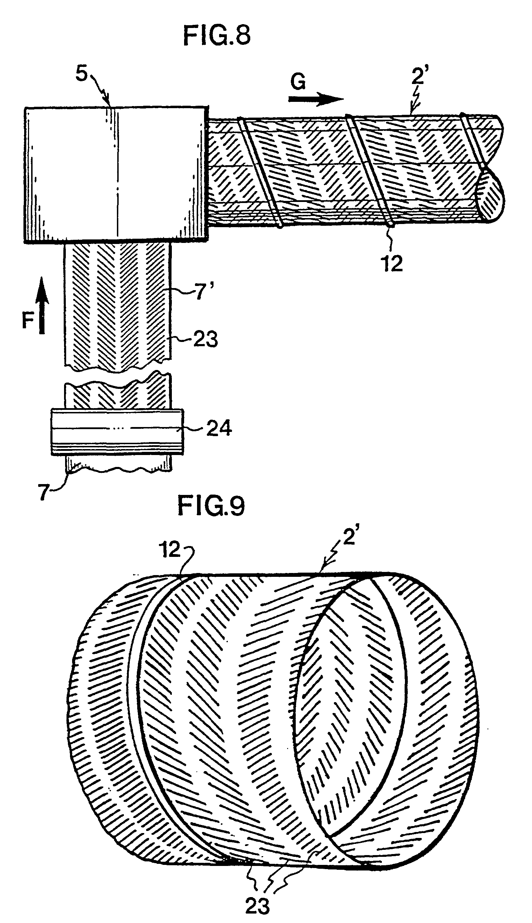

Figs 8-9 show a modified tube 2' for use as an inner tube of a double-walled structure of the present invention, preferably a silencer for use in a ventilation duct system. In this case, the perforations of the tube 2' are formed as longitudinal, parallel areas 23 of expanded metal which are schematically shown. The term expanded metal is well known, see for instance US Patent No. 4,034,826 mentioned by way of introduction.

Thus, the flat sheet metal strip 7 is fed to a schematically shown apparatus 24 for forming the expanded-metal areas 23, and then the partially perforated metal strip 7' is fed to the schematically shown forming head 5 (arrow F), in which it is helically wound into a tube 2' having a helical lock seam 12, as described above (arrow G).

The expanded-metal tube 2' is then cut off and fed to the apparatus 3 and 4 (Fig. 1) for completing the double-walled structure. The tube 2' is enclosed by a sound-absorbing material 19 and by an outer tube 20, as is the perforated tube 2 shown in Figs 5-7.

The tube 2' may have several parallel areas 23 of expanded metal separated by non-machined, longitudinal areas of the metal strip 7. The apparatus 24 may have various rollers (not shown) for providing the indicated expanded-metal areas 23. In an embodiment, the entire strip 7' consists of expanded metal. Preferably, the expanded-metal areas 23 are continuous and extend throughout the entire length of the strip.

In practice, the apparatus 24 for producing the expanded-metal strip 7' comprises a set of rollers arranged in pairs, each pair having an upper roller and a lower roller (not shown). In each pair of rollers, the metal strip 7 is squeezed in the nip between the two rollers, one of which has means for cutting small slots in the strip 7, thereby forming the expanded-metal areas 23. Each pair of rollers provides small cuts or slots in the strip, thus forming longitudinal areas of expanded metal on the strip. The roller apparatus 24 is known per se and operates very well.

After the roller apparatus 24, there may be a further unit (not shown) for rolling the expanded-metal strip 7' into flat shape. In principle, the apparatus 24 and the rolling and flattening unit may be arranged in line with the forming head 5. In practice, however, it is more suitable and common that the strip provided with expanded-metal areas is placed in an intermediate supply on a reel (not shown) and then fed to the forming head 5 separately.

A known apparatus for providing expanded-metal strips is, for instance, disclosed in Swedish Patent No. 9502600-1 published under SE-C-509 330.

Preferably, the cloth cover 13 is applied on the outside of the inner tube 2'. As an alternative, the cloth cover 13 may be applied on the inside of the inner tube 2', thus still covering the perforations of the inner tube 2'. When using this alternative, the reels 7a, 13a of Figs 8-9 will change positions.

By forming the helically-wound lock-seam tube 2' with expanded-metal areas 23, several advantages are achieved. Material savings are obtained, since the sheet metal strip 7 used may have a smaller width than in an alternative production in which perforations are punched in the strip 7 before being fed to the tube former. Scrap is kept at a minimum. Further, the stiffness of the tube 2' is enhanced.

Surprisingly, it has also been found that a double-walled silencer made in accordance with the invention, thus having an expanded-metal inner tube, has a better sound-absorbing function than standard silencers. The sound-absorbing effect is enhanced on the order of 3-5 dB in the frequency range 0-1000 Hz.

In an embodiment, the expanded-metal tube 2' is covered by an air-permeable cover 13 as described above.

Finally, it should be pointed out that the inventive concept is by no means restricted to the embodiments described herein, but several modifications are feasible within the scope of the appended claims. In particular, it should be mentioned that the production of the double-walled structure may be carried out either in line, in which case the machine 1 and the two apparatus 3 and 4 are arranged in line, or in separate stations. In the latter case, lengths of tubing 2 are put in an intermediate supply before providing the sound-absorbing material 19 on the tubing 2 and before insertion of the tube assembly 2, 19 in the outer tube or casing 20. The filler material to be applied on the tubing fed out of the forming head can either be applied in the shape of a rectangular piece which is swept around the tubing, or applied in the shape of a strip which is helically wound on the outside of the tubing (not shown). Of course, there are other alternatives for applying the filler material.

## Claims

1. A double-walled structure in a ventilation duct system, comprising: an inner tube (2'); an outer casing (20) spaced from and enclosing the inner tube; and a sound-absorbing material (19) provided between the inner tube and the casing; the inner tube being a helically-wound lock-seam tube (2') formed from a sheet metal strip (7'), **characterised in that** the sheet metal strip (7') has at least one longitudinal area (23) of expanded metal, and that a fluid-permeable cover (13) is applied to and tightly covers the outside of the inner tube (2').

2. The structure as claimed in claim 1, wherein the sheet metal strip (7') has several parallel longitudinal areas (23) of expanded metal.

3. The structure as claimed in claim 1, wherein the fluid-permeable cover is formed from a further strip (13) helically wound together with the sheet metal strip (7').

4. The structure as claimed in claim 3, wherein the further strip (13) has its longitudinal edge portions secured in the helical lock seam (12) of the inner tube (2').

5. The structure as claimed in claim 3 or 4, wherein the sheet metal strip (7') and the further strip (13) have substantially the same width.

6. The structure as claimed in any one of the claims 1-6, wherein the fluid-permeable cover (13) is of a cloth material.

7. The structure as claimed in claim 6, wherein the cloth material (13) is a polymer material.

8. The structure as claimed in any one of the preceding claims, wherein the outer casing is a tube (20) coaxial with the inner tube (2').

9. The structure as claimed in claim 8, wherein the outer tube (20) is a helically-wound lock-seam tube.

10. The structure as claimed in any one of the preceding claims, wherein the sound-absorbing material (19) fills up the space between the inner tube (2') and the outer casing (20).

11. The structure as claimed in claim 10, wherein the sound-absorbing material is mineral wool.

12. Use of the double-walled structure as claimed in any one of the preceding claims as a silencer of a ventilation duct system.

## Patentansprüche

1. Doppelwandige Struktur in einem Belüftungsleitungssystem, die eine innere Röhre (2'), eine äußere Verkleidung (20), die von der inneren Röhre beabstandet ist und sie umschließt, und ein schalldämpfendes Material (19) umfasst, das zwischen der inneren Röhre und der Verkleidung vorhanden ist, wobei die innere Röhre eine Spiralfalzröhre (2') ist, die aus einem Blechband (7') hergestellt ist, **dadurch gekennzeichnet, dass** das Blechband (7') wenigstens einen Längsbereich (23) aus Streckmetall hat und dass eine fluiddurchlässige Abdeckung (13) auf die Außenseite der inneren Röhre (2') aufgebracht ist und sie dicht abdeckt.

2. Struktur nach Anspruch 1, wobei das Blechband (7') mehrere parallele Längebereiche (23) aus Streckmetall hat.

3. Struktur nach Anspruch 1, wobei die fluiddurchlässige Abdeckung aus einem weiteren Band (13) hergestellt ist, das mit dem Blechband (7') spiralförmig zusammengewickelt ist.

4. Struktur nach Anspruch 3, wobei die Längskantenabschnitte des weiteren Bandes (13) in dem Spiralfalz (12) der inneren Röhre (2') befestigt sind.

5. Struktur nach Anspruch 3 oder 4, wobei das Blechband (7') und das weitere Band (13) im Wesentlichen die gleiche Breite haben.

6. Struktur nach einem der Ansprüche 1-6, wobei die fluiddurchlässige Abdeckung (13) aus einem Gewebematerial besteht.

7. Struktur nach Anspruch 6, wobei das Gewebematerial (13) ein Polymermaterial ist.

8. Struktur nach einem der vorangehenden Ansprüche, wobei die äußere Verkleidung eine Röhre (20) koaxial zu der inneren Röhre (2') ist.

9. Struktur nach Anspruch 8, wobei die äußere Röhre (20) eine Spiralfalzröhre ist.

10. Struktur nach einem der vorangehenden Ansprüche, wobei das schalldämpfende Material (19) den Raum zwischen der inneren Röhre (2') und der äußeren Verkleidung (20) ausfüllt.

11. Struktur nach Anspruch 10, wobei das schalldämpfende Material Steinwolle ist.

12. Einsatz der doppelwandigen Struktur nach einem der vorangehenden Ansprüche als Schalldämpfer eines Belüftungsleitungssystems.

## Revendications

1. Structure à double paroi dans un système à conduits de ventilation, comprenant un tube interne (2'), une enveloppe externe (20) distante du tube interne et entourant celui-ci, et un matériau (19) d'absorption acoustique placé entre le tube interne et l'enveloppe, le tube interne étant un tube à agrafage (2') enroulé en hélice formé d'une bande d'une feuille métallique (7'), **caractérisée en ce que** la bande (7') de feuille métallique a au moins une région longitudinale (23) de métal déployé, et **en ce qu'**une couverture perméable au fluide (13) est appliquée à l'extérieur du tube interne (2') et recouvre intimement cette partie extérieure.

2. Structure selon la revendication 1, dans laquelle la bande (7') de feuille métallique a plusieurs régions longitudinales parallèles (23) de métal déployé.

3. Structure selon la revendication 1, dans laquelle la couverture perméable au fluide est formée d'une bande supplémentaire (13) enroulée en hélice avec la bande (7') de feuille métallique.

4. Structure selon la revendication 3, dans laquelle la bande supplémentaire (13) a ses parties de bords longitudinaux fixées dans l'agrafage hélicoïdal (12) du tube interne (2').

5. Structure selon la revendication 3 ou 4, dans laquelle la bande (7') de feuille métallique et la bande supplémentaire (13) ont pratiquement la même largeur.

6. Structure selon l'une quelconque des revendications 1 à 5, dans laquelle la couverture (13) perméable au fluide est formée d'un matériau d'étoffe.

7. Structure selon la revendication 6, dans laquelle le matériau d'étoffe (13) est un matériau polymère.

8. Structure selon l'une quelconque des revendications précédentes, dans laquelle l'enveloppe externe est un tube (20) coaxial au tube interne (2').

9. Structure selon la revendication 8, dans laquelle le tube externe (20) est un tube à agrafage enroulé en hélice.

10. Structure selon l'une quelconque des revendications précédentes, dans laquelle le matériau d'absorption acoustique (19) remplit l'espace compris entre le tube interne (2') et l'enveloppe externe (20).

11. Structure selon la revendication 10, dans laquelle le matériau d'absorption acoustique est de la laine minérale.

12. Application de la structure à double paroi selon l'une quelconque des revendications précédentes à un silencieux d'un système à conduits de ventilation.
